(19) Europäisches Patentamt
European Patent Office
Office européen des brevets

(11) Veröffentlichungsnummer : **0 523 001 A1**

# (12) EUROPÄISCHE PATENTANMELDUNG

(21) Anmeldenummer : **92810453.8**

(22) Anmeldetag : **11.06.92**

(51) Int. Cl.[5] : **C08G 59/68**, C08G 59/18, C08G 59/40, C08G 59/66

(30) Priorität : **20.06.91 CH 1821/91**

(43) Veröffentlichungstag der Anmeldung : **13.01.93 Patentblatt 93/02**

(84) Benannte Vertragsstaaten : **AT CH DE ES FR IT LI**

(71) Anmelder : **CIBA-GEIGY AG**
**Klybeckstrasse 141**
**CH-4002 Basel (CH)**

(72) Erfinder : **Setiabudi, Frans, Dr.**
**Kapellenstrasse 7**
**W-7812 Bad Krozingen (DE)**

## (54) Härtbare Epoxidharz-Zusammensetzung enthaltend einen blockierten Beschleuniger.

(57) Härtbare Zusammensetzungen enthaltend
(a) ein Epoxidharz,
(b) ein tertiäres Amin oder eine Imidazolverbindung und
(c) bis zu 30 Gew.% bezogen auf den Anteil der Komponente (a) eines Polycarbonsäureanhydrids eignen sich zur Herstellung von flexiblen Prepregs mit hoher Lagerbeständigkeit. Die Prepregs lassen sich bei relativ niedrigen Temperaturen von 65-100 °C aushärten.

EP 0 523 001 A1

Gegenstand der vorliegenden Erfindung sind härtbare Zusammensetzungen enthaltend

(a) ein Epoxidharz,

(b) ein tertiäres Amin oder eine Imidazolverbindung und

(c) bis zu 30 Gew.%, bezogen auf den Anteil der Komponente (a), eines Polycarbonsäureanhydrids

Für die Herstellung von Prepregs auf der Basis von Epoxidharzen ohne Verwendung von Lösungsmitteln werden im allgemeinen Mischungen von niederviskosen, flüssigen und hochviskosen bis festen Epoxidharzen eingesetzt. Um diese in wenig klebrige bis trockene Prepregs überführen zu können, müssen sie unter äusserst streng kontrollierten Bedingungen mit Härtern teilweise vorreagiert werden. Man spricht hier üblicherweise von der sogenannten B-Stufen-Bildung. Im allgemeinen werden mindestens zwei Härter mit unterschiedlicher Reaktivität eingesetzt.

In der EP-A 429 395 wird die Herstellung von Prepregs aus Epoxidharz-Stoffgemischen enthaltend einen latenten Härter, ein primäres oder sekundäres Amin und ein Mercaptan beschrieben, die sich durch eine hohe Lagerstabilität auszeichnen. Die Aushärtung dieser Prepregs erfordert jedoch relativ hohe Temperaturen von >100 °C.

Um eine Endhärtung bei etwa 100 °C zu erreichen, muss man die Vernetzungsreaktion katalysieren. Als Härtungsbeschleuniger für die Vernetzungsreaktion mit dem latenten Härter (C-Stufen-Bildung) werden oft tertiäre Amine eingesetzt. Tertiäre Amine katalysieren jedoch nicht nur die Reaktion mit dem latenten Härter bei höheren Temperaturen, sondern auch die Homopolymerisation des Epoxids und die Reaktion mit dem B-Stufen-Härter bereits bei Raumtemperatur, was eine ungenügende Lagerstabilität der Epoxidharz-Härter-Mischungen bzw. der Prepregs zur Folge hat. Um eine ausreichende Lagerstabilität zu gewährleisten, müsste der Beschleuniger reversibel blockiert werden, so dass er erst bei erhöhten Temperaturen wirksam wird.

In der DE-Patentschrift 2139 290 werden Bortrichlorid-Addukte von tertiären Aminen als Beschleuniger für die Härtung von Epoxidharzen mit latenten Härtern vorgeschlagen. Die aus solchen Zusammensetzungen hergestellten Prepregs genügen jedoch den heutigen Anforderungen in Bezug auf Flexibilität und Klebrigkeit nicht.

Die DE-OS 3 440 362 beschreibt härtbare Zusammensetzungen enthaltend ein Polyamin/Carbonsäure-Umsetzungsprodukt als latenten Härter. Die Lagerstabilität solcher Mischungen ist jedoch für gewisse Anwendungen immer noch unzureichend.

Es wurde nun ein Epoxidharz-Bindemittel entwickelt, das als Härtungsbeschleuniger ein tertiäres Amin enthält, dessen Katalysatorwirkung durch Zusatz eines Polycarbonsäureanhydrids blockiert wird, was eine hohe Raumtemperatur-Stabilität des härtbaren Gemisches bewirkt. Bei Erwärmung auf etwa 80-100 °C entsteht freies Amin, welches entweder die Homopolymerisation des Epoxidharzes oder, falls das Gemisch noch einen Härter oder latenten Härter enthält, die Vernetzungssreaktion katalysiert. Auf diese Weise lassen sich Prepregs herstellen, die ohne merkliche Verschlechterung ihrer Eigenschaften bis zu drei Wochen bei Raumtemperatur und bis zu einem Monat bei 5 °C gelagert und bei relativ niedrigen Temperaturen von etwa 65-100 °C innerhalb kürzester Zeit ausgehärtet werden können.

Gegenstand der vorliegenden Erfindung sind härtbare Zusammensetzungen enthaltend

(a) ein Epoxidharz,

(b) ein tertiäres Amin oder eine Imidazolverbindung und

(c) bis zu 30 Gew.%, bezogen auf den Anteil der Komponente (a), eines Polycarbonsäureanhydrids

Vorzugsweise enthalten die erfindungsgemässen Zusammensetzungen 1-20 Gew. %, insbesondere 2-15 Gew.%, der Komponente (c), bezogen auf den Anteil der Komponente (a).

Als Epoxidharz (a) der erfindungsgemässen Stoffgemische kann im Prinzip jedes in der Technik der Epoxidharze übliche Epoxid eingesetzt werden.

Beispiele für Epoxidharze sind:

I) Polyglycidyl- und Poly(β-methylglycidyl)ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly(β-methylglycidyl)ether erhältlich durch Umsetzung einer Verbindung mit mindestens zwei freien alkoholischen Hydroxygruppen und/oder phenolischen Hydroxygruppen und

Epichlorhydrin oder β-Methylepichlorhydrin unter alkalischen Bedingungen, oder in Anwesenheit eines sauren Katalysators und anschliessende Alkalibehandlung.

Ether dieses Typs leiten sich beispielsweise ab von acyclischen Alkoholen, wie Ethylenglykol, Diethylenglykol und höheren Poly(oxyethylen)glykolen, Propan- 1,2-diol oder Poly(oxypropylen)glykolen, Propan- 1,3-diol, Butan- 1,4-diol, Poly(oxytetramethylen)glykolen, Pentan- 1,5-diol, Hexan- 1,6-diol, Hexan-2,4,6-triol, Glycerin, 1,1,1-Trimethylolpropan, Pentaerythrit oder Sorbit, sowie von Polyepichlorhydrinen.

Sie leiten sich aber auch beispielsweise ab von cycloaliphatischen Alkoholen, wie 1,4-Cyclohexandimethanol, Bis(4-hydroxycyclohexyl)methan oder 2,2-Bis(4-hydroxycyclohexyl)propan, oder sie besitzen aromatische Kerne, wie N,N-Bis(2-hydroxyethyl)anilin oder p,p′-Bis(2-hydroxyethylamino)diphenylmethan.

Die Epoxidverbindungen können sich auch von einkerningen Phenolen ableiten, wie beispielsweise von Resorcin oder Hydrochinon; oder sie basieren auf mehrkernigen Phenolen, wie beispielsweise Bis(4-hydroxyphenyl)methan, 4,4′-Dihydroxybiphenyl, Bis(4-hydroxyphenyl)sulfon, 1,1,2,2-Tetrakis(4-hydroxyphenyl)ethan, 2,2-Bis(4-hydroxyphenyl)propan oder 2,2-Bis(3,5-dibrom-4-hydroxyphenyl)propan, sowie von Novolaken erhältlich durch Kondensation von Aldehyden, wie Formaldehyd, Acetaldehyd, Chloral oder Furfuraldehyd, mit Phenolen, wie Phenol, oder mit Phenolen, die im Kern mit Chloratomen oder $C_1$-$C_9$-Alkylgruppen substituiert sind, wie beispielsweise 4-Chlorphenol, 2-Methylphenol oder 4-tert-Butylphenol, oder durch Kondensation mit Bisphenolen, so wie oben beschrieben.

III) Poly(N-glycidyl)verbindungen erhältlich durch Dehydrochlorierung der Reaktionsprodukte von Epichlorhydrin mit Aminen, die mindestens zwei Aminwasserstoffatome enthalten. Bei diesen Aminen handelt es sich zum Beispiel um Anilin, n-Butylamin, Bis(-4-aminophenyl)methan, m-Xylylendiamin oder Bis(4-methylaminophenyl)methan.

Zu den Poly(N-glycidyl)verbindungen zählen aber auch Triglycidylisocyanurat, N,N′-Di-glycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly(S-glycidyl)verbindungen, beispielsweise Di-S-glycidylderivate, die sich von Dithiolen, wie beispielsweise Ethan- 1,2-dithiol oder Bis(4-mercaptomethylphenyl)ether, ableiten.

V) Cycloaliphatische Epoxidharze, beispielsweise Bis(2,3-epoxycyclopentyl)ether, 2,3-Epoxycyclopentylglycidylether, 1,2-Bis(2,3-epoxycyclopentyloxy)ethan oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N′-(2-glycidyloxypropyl)-5,5-di-methylhydantoin oder 2-Glycidyloxy-1,3-bis(5,5-dimethyl-1-glycidylhydantoin-3-yl)propan.

Bevorzugt verwendet werden Epoxidharze mit einem Epoxidgehalt von 2 bis 10 Aequivalenten/kg, welche Glycidylether, Glycidylester oder N-Glycidylderivate von aromatischen, heterocyclischen, cycloaliphatischen oder aliphatischen Verbindungen sind.

Die verwendeten Epoxidharze sind vorzugsweise flüssig, d.h. es handelt sich entweder um flüssige Harze oder um flüssige Gemische fester und flüssiger Harze.

Besonders bevorzugt als Epoxidharze werden Diglycidylether von Bisphenolen oder Epoxidnovolake.

Am meisten bevorzugt als Epoxidharze werden Diglycidylether von Bisphenol A oder Bisphenol F.

Als Komponente (b) der erfindungsgemässen Zusammensetzungen kann im Prinzip jedes in der Technik der Härtungsbeschleunigung bekannte tertiäre Amin oder Imidazol eingesetzt werden.

Wird als Komponente (b) ein tertiäres Amin verwendet, so kann es sich dabei um ein aliphatisches, cycloaliphatisches, aromatisches oder heterocyclisches Amin mit mindestens einem tertiären Stickstoffatom handeln. Die erfindungsgemäss einzusetzenden tertiären Amine können neben einer oder mehreren tertiären Aminogruppen auch eine oder mehrere primäre oder sekundäre Aminogruppen, Hydroxylgruppen oder Heteroatome wie Sauerstoff, Phosphor oder Schwefel enthalten.

Beispiele für geeignete tertiäre Amine sind Trimethylamin, Triethylamin, Tri-n-propylamin, Tri-n-butylamin, Benzyldimethylamin, Triphenylamin, Phenyldimethylamin, Phenyldiethylamin, Cyclohexyldimethylamin, Cyclohexyldiethylamin, Urotropin, Triethylendiamin, N,N-Dimethyl-N′-(2-cyanoethyl)ethylendiamin, N,N-Dimethyl-N′-(3-aminopropyl)ethylendiamin, N,N-Dimethyl-N′, N′-bis(3-aminopropyl)ethylendiamin, N,N-Dimethyl-N′-(2-cyanoethyl)1,3-diaminopropan, N,N-Dimethyl-N′-(3-aminopropyl) 1,3-diaminopropan, N,N-Dimethyl-N′,N′-bis(3-aminopropyl)1,3-diaminopropan, Bis(2-dimethylaminoethyl)ether, 2-Dimethylaminoethyl-3-dimethylaminopropylether, 2,2-Dimorpholinodiethylether, N-Methoxyethylmorpholin, N-Methylmorpholin, N-Ethylmorpholin, N-Methylpiperidin, N-Ethylpiperidin, N,N-Dimethylethanolamin, 2-(2-Dimethylaminoethoxy)ethanol, N-(2-Hydroxyethoxyethyl)-2-azanorbornan, N,N,N-Trimethyl-N-hydroxyethyl-bisaminoethylether, N,N-Bis(3-dimethylaminopropyl)-N-isopropanolamin, N-(3-Dimethylaminopropyl)-N,N-diisopropanolamin, Triethanolamin, N,N'-Dimethylpiperazin, Trimethylaminoethylpiperazin, N-Methyl-2-azanorboman, N,N,N',N',N'-Pentamethyldiethylentriamin, N,N,N',N'-Tetramethylhexamethylendiamin.

Bevorzugt werden in der erfindungsgemässen Zusammensetzungen tertiäre Amine eingesetzt, die zwei oder mehr Stickstoffatome enthalten.

Besonders bevorzugt sind tertiäre Amine mit zwei oder drei Dialkylaminogruppen, wie beispielsweise N,N-Dimethyl-N',N'-bis(3-aminopropyl)ethylendiamin, N,N-Dimethyl-N', N'-bis(3-aminopropyl) 1,3-diaminopropan, Bis(2-dimethylaminoethyl)ether, 2-Dimethylaminoethyl-3-dimethylaminopropylether, 2,2-Dimorpholinodiethylether, N,N,N-Trimethyl-N-hydroxyethyl-bisaminoethylether, N,N-Bis(3-dimethylaminopropyl)-N-isopropanolamin, N-(3-Dimethylaminopropyl)-N,N-diisopropanolamin, N,N,N',N',N''-Pentamethyldiethylentriamin und N,N,N',N'-Tetramethylhexamethylendiamin.

Insbesondere bevorzugt sind 2-Dimethylaminoethyl-3-dimethylaminopropylether, N,N'-Dimethylpiperazin und N,N,N',N',N''-Pentamethyldiethylentriamin.

Weiterhin können als Komponente (b) in den erfindungsgemässen Zusammensetzungen Imidazolverbindungen eingesetzt werden, wie beispielsweise Imidazol, 2-Ethyl-, 2-Phenyl-, 1-Methylimidazol, 1-Cyanoethyl-2-ethyl-4-methylimidazol oder 2-Ethyl-4-methylimidazol.

Bevorzugte Imidazolverbindungen sind 1-Methylimidazol und 2-Ethylimidazol.

Zur Blockierung des tertiären Amin bzw. Imidazols kann als Komponente (c) der erfindungsgemässen Zusammensetzungen im Prinzip jedes Polycarbonsäureanhydrid eingesetzt werden.

Vorzugsweise werden Anhydride von cycloaliphatischen oder aromatischen Di- oder Tetracarbonsäuren verwendet.

Bevorzugte Anhydride sind Phthalsäureanhydrid, Tetrahydrophthalsäureanhydrid, Hexahydrophthalsäureanhydrid, Nadicanhydrid, Pyromellitsäuredianhydrid, Methylhexahydrophthalsäureanhydrid und insbesondere Methyltetrahydrophthalsäureanhydrid und Methylnadicanhydrid.

Die Mengenverhältnisse der Komponenten der erfindungsgemässen Zusammensetzungen können in weiten Bereichen variieren. Im allgemeinen werden pro 100 Gewichtsteile Epoxidharz etwa 1-20, vorzugsweise 1-10, Gewichtsteile der Komponente (b) und bis zu 30, vorzugsweise 1-20, besonders bevorzugt 2- 15, Gewichtsteile der Komponente (c) eingesetzt.

Zur Herstellung von Prepregs können den erfindungsgemässen Zusammensetzungen als zusätzliche Komponente (d) ein oder mehrere Härter beigemischt werden.

Einen weiteren Gegenstand der vorliegenden Erfindung bilden somit härtbare Zusammensetzungen enthaltend

(a) ein Epoxidharz,
(b) ein tertiäres Amin oder eine Imidazolverbindung,
(c) bis zu 30 Gew.%, bezogen auf den Anteil der Komponente (a), eines Polycarbonsäureanhydrids und
(d) einen oder mehrere Härter für das Epoxidharz.

Vorzugsweise handelt es sich bei der Komponente (d) um sogenannte latente Härter, d.h. Härter, die erst bei Temperaturen oberhalb etwa 80 °C reagieren.

Als latenter Härter kann im Prinzip jede für diesen Zweck bekannte Verbindung, welche der erfindungsgemässen Definition genügt, eingesetzt werden, d.h. jede Verbindung, welche dem Epoxidharz gegenüber unterhalb der definierten Grenztemperatur von 80°C inert ist, die aber schnell unter Vernetzung des Harzes reagiert, sobald diese Grenztemperatur überschritten ist. Die Grenztemperatur der erfindungsgemäss verwendeten latenten Härter ist vorzugsweise mindestens 85°C, insbesondere mindestens 100°C. Solche Verbindungen sind wohlbekannt und auch im Handel erhältlich.

Beispiele geeigneter latenter Härter sind Dicyandiamid, Cyanoguanidine, wie z.B. die in dem US-Patent 4,859,761 oder der EP-A 306,451 beschriebenen Verbindungen, aromatische Amine, wie z.B. 4,4'- oder 3,3'-Diaminodiphenylsulfon, oder Guanidine, wie z.B. 1-o-Tolylbiguanid, oder modifizierte Polyamine, wie z.B. Ancamine® 2014 S (Anchor Chemical UK Limited, Manchester).

Weitere geeignete Härter sind Metallsalzkomplexe von Imidazolen, wie z.B. in den US-Patenten 3,678,007 oder 3,677,978 beschrieben, Carbonsäurehydrazide, wie z.B

Adipinsäuredihydrazid, Isophthalsäuredihydrazid oder Anthranilsäurehydrazid, Triazinderivate, wie z.B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z.B. in der US-Patentschrift 3,030,247 beschrieben.

Als latente Härter geeignet sind auch Cyanacetylverbindungen, wie z.B. im US-Patent 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z.B. N,N'-Dicyanadipinsäurediamid. Solche Verbindungen sind z.B. in den US-Patenten 4,529,821, 4,550,203 und 4,618,712 beschrieben.

Weitere geeignete latente Härter sind die in der US-Patentschrift 4,694,096 beschriebenen Acylthiopropylphenole und die in der US-Patentschrift 3,386,955 offenbarten Harnstoffderivate wie beispielsweise Toluol-2,4-bis(N,N-dimethylcarbamid).

Bevorzugte latente Härter sind Dicyandiamid und insbesondere 4,4′-Diaminodiphenylsulfon.

Falls zweckmässig, können die erfindungsgemässen Stoffgemische zusätzlich weitere Beschleuniger für die Reaktion des Epoxidharzes mit dem latenten Härter enthalten. Geeignete Beschleuniger sind z.B. Harnstoffderivate, wie N,N-Dimethyl-N′-(3-chlor-4-methylphenyl)harnstoff (Chlortoluron), N,N-Dimethyl-N′-(4-chlorphenyl)harnstoff (Monuron) oder N,N-Dimethyl-N′-(3,4-dichlorphenyl)harnstoff (Diuron), 2,4-Bis(N′,N′-dimethylureido)toluol oder 1,4-Bis(N′,N′-dimethylureido)benzol.

Bevorzugt ist Chlortoluron.

Die Verwendung dieser Verbindungen ist beispielsweise in der oben erwähnten US-Patentschrift 4,283,520 beschrieben. Als Beschleuniger geeignet sind z.B. auch die in der GB-A 1,192,790 beschriebenen Harnstoffderivate.

Als besonders geeignete Komponenten (d) haben sich Mercaptane mit mindestens zwei SH-Gruppen erwiesen. Erfindungsgemässe Gemische enthaltend solche Mercaptane lassen sich unter milden Bedingungen (ca. 20-50 °C) vorhärten. Die so hergestellten vorgehärteten Zusammensetzungen können längere Zeit gelagert und ohne Zusatz von weiteren Härtern bei 65-100 °C vollständig ausgehärtet werden.

Geeignete Mercaptane sind z.B. Triglykoldimercaptan oder 1,2-Bis(2′-mercaptoethoxy)ethan, die unter dem Namen Thiokole® bekannten polymeren Polysulfide der Formel $HS(CH_2CH_2OCH_2OCH_2CH_2SS)_nCH_2CH_2OCH_2OCH_2CH_2SH$, Trimethylolpropantrithioglykolat und weitere Thioglykolate, wie z.B. die in der US 3,352,810 beschriebenen Verbindungen, aliphatische und cycloaliphatische Dithiole der in den US 3,716,588, US 3,734,968, US 3,718,700 und US 3,278,496 beschriebenen Art, Poly(mercaptoalkyl)aromaten, wie in der US 3,310,527 beschrieben, Alkylendithiole oder Hydroxyalkylendithiole der in der US 3,363,026 beschriebenen Art, Dipentaerythrit-hexa(3-mercaptopropionat) oder Trithiole, wie z.B. 2,4,6-s-Triazintrithiol.

Bevorzugte Mercaptane sind Polyoxyalkylenderivate, insbesondere Polyoxyalkylendithiole oder -trithiole.

Dabei kann es sich z.B. um Polyethylenglykol-Derivate, um Polypropylenglykol-Derivate oder auch um Copolymere mit Oxyethylen- und Oxypropyleneinheiten handeln. Die Copolymere können Blockpolymere oder statistische Polymere sein. Die entsprechenden Blockpolymere werden manchmal auch Polypropylenglykolethoxylat bzw. Polyethylenglykolpropoxylat genannt, je nachdem, ob sie enständige Polyethylenglykol- oder Polypropylenglykolblöcke aufweisen. Die im Handel erhältlichen Polypropylenglykole weisen vorwiegend sekundäre enständige Hydroxylgruppen auf; es versteht sich von selber, dass auch Polypropylen-Dithiole mit primären Thiolgruppen verwendet werden können.

Weitere geeignete Mercaptane sind die in der US-Patentschrift 4 990 697 beschriebenen Polytetrahydrofuranditiole.

Geeignete Mercaptane sind auch die unter der Bezeichnung CapCure® (Henkel Napco AG) vertriebenen Polyoxyalkylen-Derivate wie z.B. CapCure® WR-6 oder WR-36, insbesondere CapCure® 3-800 der Formel

$$R\!-\![O\!-\!(CH_2\underset{\displaystyle CH_3}{\underset{|}{C}}HO)_n\!-\!CH_2\underset{\displaystyle OH}{\underset{|}{C}}HCH_2SH]_3$$

mit n = 1-2 und R gleich einem dreiwertigen Rest eines aliphatischen Kohlenwasserstoffs.

Besonders geeignete Mercaptane sind Verbindungen der Formeln

$$HS(CH_2CH_2O)_{7\text{-}8}CH_2CH_2SH$$

und

$$HS(CH_2CH_2CH_2CH_2O)_mCH_2CH_2CH_2CH_2SH$$

mit m = 7-8, 12-13 oder 26-27.

Am meisten bevorzugt sind Triglykoldimercaptan und CapCure® 3-800.

Eine besonders bevorzugte Ausführungsform der vorliegenden Erfindung enthält als Komponente (d) ein Gemisch aus einem latenten Härter und einem Mercaptan mit mindestens zwei SH-Gruppen.

Beim Erhitzen solcher Gemische in einer DSC-Apparatur (DSC = Differential Scanning Calorimeter) zeigt das DSC-Diagramm (Reaktionsenthalpie in Abhängigkeit von der Temperatur) zwei ausgeprägte Maxima und

eine klare Basislinien-Trennung. Das erste Reaktionsmaximum ist auf die Umsetzung des Harzes mit dem Mercaptan (B-Stufe) zurückzuführen und liegt je nach gewählter Zusammensetzung beispielsweise im Bereich von etwa 40 bis etwa 110 °C. Das zweite Maximum resultiert aus der Vernetzung mit dem latenten Härter und liegt beispielsweise im Bereich von etwa 100 bis 140 °C, vorzugsweise etwa 110 bis 135 °C.

Die Komponente (d) der erfindungsgemässen Stoffgemische wird im allgemeinen in Mengen von etwa 3-60 Gewichtsteilen, vorzugsweise etwa 5-50 Gewichtsteilen, pro 100 Gewichtsteile Epoxidharz eingesetzt.

Wird als Komponente (d) ein Gemisch aus einem latenten Härter und einem Mercaptan verwendet, so enthalten die erfindungsgemässen Zusammensetzungen in der Regel etwa 15-40 Gewichtsteile, vorzugsweise 20-35 Gewichtsteile, des latenten Härters und etwa 3-20 Gewichtsteile, vorzugsweise 5-15 Gewichtsteile, des Mercaptans, bezogen jeweils auf 100 Gewichtsteile des Epoxidharzes.

Die Mengen des gegebenenfalls beigefügten zusätzlichen Beschleunigers für die Härtung mit dem latenten Härter sind dem Fachmann bekannt.

Beispiele für geeignete Mengen der einzelnen Komponenten der erfindungsgemässen Stoffgemische sind aus den Zusammensetzungen der Ausführungsbeispiele ersichtlich.

Die erfindungsgemässen Gemische können auch aus einer Lösung, beispielsweise in Methylethylketon, heraus verarbeitet werden.

Gewünschtenfalls kann man den härtbaren Gemischen zur Herabsetzung der Viskosität reaktive Verdünner, wie z.B. Butandioldiglycidylether, Monoglycidylether isomerer höherer Alkohole, wie z.B. Grilonit RV 1814® der Fa. Ems-Chemie oder Butylglycidylether, 2,2,4-Trimethylpentylglycidylether, Phenylglycidylether, Kresylglycidylether oder Glycidylester zusetzen.

Die erfindungsgemässen Stoffgemische können auch Haftvermittler enthalten. Im Prinzip kann jeder bekannte Haftvermittler verwendet werden. Als besonders geeignete Haftvermittler haben sich Silane, wie z.B. γ-Glycidyloxypropyltrimethoxysilan (Silan A-187 der Fa. Union Carbide) oder γ-Mercaptopropyltrimethoxysilan (Silan A-189 der Fa. Union Carbide) oder Titanverbindungen, wie Tetraisopropyl-bis(dioctylphosphonato)-titanat (KR 41B der Fa. Kenrich Petrochemicals, Inc. USA) erwiesen.

Als weitere übliche Zusätze können die erfindungsgemässen Gemische ferner Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Antioxidantien und Lichtschutzmittel enthalten.

Die Herstellung der erfindungsgemässen Stoffgemische kann in üblicher Weise durch Vermischen der Komponenten mit Hilfe bekannter Mischaggregate (Rührer, Walzen) erfolgen.

Die erfindungsgemässen Gemische lassen sich beispielsweise als Klebstoffe (Klebfilme, Hot-melts, Pasten, Ein-Komponenten-Kleber, Patches), Matrixharze, Lacke, Dichtungsmassen oder Injektionsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Dichtungsmassen, Anstrichmittel, Beschichtungsmassen, Lacke, Tauchharze, Giessharze und insbesondere als Imprägnierharze, Laminierharze, Matrixharze und Klebemittel verwendet werden.

Die Erfindung betrifft daher auch vernetzte Produkte erhältlich durch Härtung der erfindungsgemässen Stoffgemische.

Die vernetzten Systeme weisen ausgezeichnete mechanische und thermische Eigenschaften auf, auch wenn die vollständige Härtung erst nach längerer Lagerung (mehrere Wochen bis Monate) der härtbaren Gemische erfolgt.

Wie erwähnt, eignen sich die erfindungsgemässen Stoffgemische insbesondere als Imprägnierharze für die Herstellung von Faserverbundmaterialien. Gegenstand der Erfindung sind somit auch Faserverbundmaterialien imprägniert mit einem erfindungsgemässen Stoffgemisch, Prepregs erhältlich durch Imprägnierung eines Gewebes mit einem Stoffgemisch und gegebenenfalls anschliessendes Erhitzen des imprägnierten Gewebes, sowie die durch vollständige Aushärtung der Prepregs erhältlichen Laminate.

Da die erfindungsgemässen Zusammensetzungen auch bei relativ niedrigen Temperaturen von 70-100 °C aushärten, können sie insbesondere auch in Verbindung mit hitzeempfindlichen Materialien, wie beispielsweise Polyurethanen, eingesetzt werden. Ein bevorzugtes Anwendungsgebiet ist daher die Herstellung von Skiern, Booten, anderen Sportartikeln und Karosseriebauteilen.

Weiterhin können die erfindungsgemässen Stoffgemische als Klebstoffe, insbesondere Hotmelt-Reaktionskleber und Klebfilme, eingesetzt werden.

Die folgenden Beispiele erläutern die Erfindung.

Beispiele 1-9

In den in Tabelle 1 definierten Zusammensetzungen werden die folgenden Komponenten eingesetzt:

| | |
|---|---|
| Epoxidharz 1: | Ein Bisphenol A-diglycidylether mit einem Epoxidäquivalentgewicht von 186,2 g/val |
| Epoxidharz 2: | Ein Bisphenol F-diglycidylether mit einem Epoxidäquivalentgewicht von 165,3 g/val |
| Epoxidharz 3: | Ein Hexandioldiglycidylether mit einem Epoxidäquivalentgewicht von 112 g/val |
| Latenter Härter 1: | 4,4'-Diaminodiphenylsulfon |
| Latenter Härter 2: | Eine Mischung aus 28 Gewichtsteilen Dicyandiamid und 72 Gewichtsteilen Bisphenol A-diglycidylether mit einem Epoxidäquivalentgewicht von 192,3 g/val |

CapCure® 3-800:

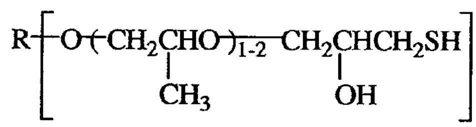 der Fa. Henkel Napco AG

Die Zusammensetzungen werden durch Vermischen aller Bestandteile, gegebenenfalls unter leichtem Erhitzen, hergestellt.

Isotherme Härtung bei 100 °C innerhalb 15 Minuten

Die in Tabelle 1 aufgeführten Zusammensetzungen werden unter verschiedenen Bedingungen gelagert und anschliessend isotherm ausgehärtet. Die Härtung, DSC- und $T_g$-Messungen werden mit einem Mettler Thermoanalytischen System TA-3000 vorgenommen. Dabei werden 15-20 mg der Zusammensetzung in der Messzelle isotherm bei 100 °C innerhalb 15 Minuten ausgehärtet.

Tabelle 1: Bestandteile der Zusammensetzungen in Gewichtsteilen

| Beispiel Nr. | 1 | 2 | 3 | 4 | 5 | 6 | 7 | 8 | 9 |
|---|---|---|---|---|---|---|---|---|---|
| Epoxidharz 1 | | 100 | 100 | | 100 | 80 | 80 | 80 | 80 |
| Epoxidharz 2 | 100 | | | 100 | | | | | |
| Epoxidharz 3 | | | | | | 20 | 20 | 20 | 20 |
| Latenter Härter 1 | 21 | | | 21 | | | | | |
| Latenter Härter 2 | | | 34 | | | | | | |
| Triethylenglykoldimercaptan | 12 | 13 | 8 | | | 8 | 8 | 8 | 8 |
| CapCure® 3-800 | | | | 12 | | | | | |
| 1-Methylimidazol | | | | | 4 | | | | |
| 2-Ethylimidazol | | 5 | | | | | | | |
| 2-Dimethylaminoethyl-3-dimethylaminopropylether | | | 4,5 | 1,8 | | | | | |
| N,N,N',N',N''-Pentamethyldiethylentriamin | 2,5 | | | | | | | | |
| N,N'-Dimethylpiperazin | | | | | | 6 | 6 | 6 | 6 |
| Methyltetrahydrophthalsäureanhydrid | | 8 | | | 6 | | | | |
| Methylnadicanhydrid | 7 | | 8 | 3,6 | | | | | |
| Hexahydrophthalsäureanhydrid | | | | | | 12 | | | |
| Methylhexahydrophthalsäureanhydrid | | | | | | | 13 | | |
| Dodecenylbernsteinsäureanhydrid | | | | | | | | 12 | |
| Tetrahydrophthalsäureanhydrid | | | | | | | | | 10 |

Anschliessend wird die Restenthalpie im gleichen Gerät mit einer Heizgeschwindigkeit von 10 °C/min gemessen.

Der Umsatz (= Vernetzungsgrad) errechnet sich nach der folgenden Gleichung:

$$\text{Umsatz [\%]} = \frac{\text{Gesamtenthalpie} - \text{Restenthalpie}}{\text{Gesamtenthalpie}} \times 100$$

Die Gelierzeit bei 100 °C wird auf einer Gelierzeitheizplatte mit Automatik bestimmt. Dabei wird ein Drahtbügel (∅ 0,4 mm) durch die Substanz gezogen, bis eine bestimmte Festigkeit der Substanz erreicht wird.

In Tabelle 2 sind die Gesamtenthalpien, Restenthalpien und Umsätze der Härtungsreaktionen sowie die Gelierzeiten bei 100 °C angegeben.

Tabelle 2: Umsatz nach 15 min Härtung bei 100 °C und Gelierzeit bei 100 °C

| Beispiel | Lagerung | Gesamtenthalpie [J/g] | Restenthalpie [Jg] | Umsatz [%] | Gelierzeit bei 100 °C |
|---|---|---|---|---|---|
| 1 | frisch<br>7 d/5 °C | 424 | 13,9<br>28,4 | 96<br>92 | 10'33" |
| 2 | frisch<br>1 d/RT [1)]<br>7 d/5 °C | 403 | 12,0<br>10,7<br>24,9 | 97<br>98<br>94 | 11'04" |
| 3 | frisch<br>1 d/RT | 424 | 94,3<br>73,0 | 78,4<br>83,3 | 15'13" |
| 4 | frisch<br>1 d/RT | 403 | 17,4<br>16,4 | 92<br>93 | 8'16" |
| 5 | frisch<br>1 d/RT<br>7 d/5 °C | 427 | 63,8<br>45,3<br>45,5 | 85<br>89,4<br>89,4 | 11'27" |
| 6 | 3d/RT | 318,2 | | 98,1 | 7'27" |
| 7 | 3d/RT | 295 | | 98,8 | 7'24" |
| 8 | 3d/RT | 245,5 | | 97,5 | 8'18" |
| 9 | 3d/RT | 321,1 | | 96 | 11'22" |

[1)] RT: Raumtemperatur

<u>Prepregstabilität bei Raumtemperatur und bei 5 °C</u>

Ein Glasgewebe der Fa. Interglas (92146-I-550) (43 x 25 cm) wird auf einer Folie mit dem Bindemittelgemischen der Beispiele 1, 2, 4 und 5 bei Raumtemperatur imprägniert. Die Imprägnierung mit der Zusammensetzung des Beispiels 3 wird aufgrund der relativ hohen Viskosität bei 40 °C vorgenommen. Um die Luft zu entfernen und das Bindemittel optimal zu verteilen, rollt man einen Glasstab über das Prepreg.

Die auf diese Weise hergestellten Prepregs werden längere Zeit bei Raumtemperatur und bei 5 °C gelagert und in verschiedenen Zeitabständen auf ihre Klebrigkeit und Flexibilität geprüft. Die Resultate sind in Tabelle 3 dargestellt mit den folgenden Einstufungen:

Klebrigkeit:
- z: zu klebrig
- i: ideale (gewünschte) Klebrigkeit
- z/i: Klebrigkeit zwischen z und i
- i/t: fast trocken
- t: trocken

| | |
|---|---|
| Flexibilität: | s: sehr flexibel |
| | f: flexibel |
| | sp: spröde |

Tabelle 3: Prepregstabilität bei Raumtemperatur und bei 5 °C

| | | | | | | |
|---|---|---|---|---|---|---|
| Beispiel 1 | | | | | | |
| Lagerung bei RT (Tage) | 1 | 2 | 3 | 4 | 5 | 6 |
| Klebrigkeit | z | z | i | i | i/t | t |
| Flexibilität | s | s | f | f | f | sp |
| Lagerung bei 5 °C (Tage) | 7 | 15 | 30 | 42 | 57 | |
| Klebrigkeit bei RT | z | z | i | i | t | |
| Flexibilität bei RT | s | s | f | f | sp | |
| Beispiel 2 | | | | | | |
| Lagerung bei RT (Tage) | 1 | 2 | 3 | 4 | | |
| Klebrigkeit | z | z/i | i | t | | |
| Flexibilität | s | f | f | sp | | |
| Lagerung bei 5 °C (Tage) | 7 | 22 | 28 | 49 | | |
| Klebrigkeit bei RT | z | z/i | i | t | | |
| Flexibilität bei RT | s | f | f | sp | | |
| Beispiel 3 | | | | | | |
| Lagerung bei RT (Tage) | 1 | 2 | 3 | 4 | | |
| Klebrigkeit | z | z/i | i | t | | |
| Flexibilität | s | f | f | sp | | |
| Lagerung bei 5 °C (Tage) | 7 | 19 | 30 | | | |
| Klebrigkeit bei RT | z | i | t | | | |
| Flexibilität bei RT | s | f | sp | | | |
| Beispiel 4 | | | | | | |
| Lagerung bei RT (Tage) | 1 | 2 | 3 | 4 | 5 | |
| Klebrigkeit | z | i | i | i/t | t | |
| Flexibilität | s | f | f | f | sp | |
| Lagerung bei 5 °C (Tage) | 7 | 22 | 44 | | | |
| Klebrigkeit bei RT | z | i | i | | | |
| Flexibilität bei RT | s | f | f | | | |
| Beispiel 5 | | | | | | |
| Lagerung bei RT (Tage) | 1 | 2 | 3 | 4 | 5 | 6 |
| Klebrigkeit | z | z | i | i | i/t | t |
| Flexibilität | s | s | f | f | f | sp |
| Lagerung bei 5 °C (Tage) | 7 | 15 | 30 | | | |
| Klebrigkeit bei RT | z | z | i/t | | | |
| Flexibilität bei RT | s | s | sp | | | |

Tabelle 3: Prepregstabilität bei Raumtemperatur (Fortsetzung):

| | | | | | | |
|---|---|---|---|---|---|---|
| Beispiel 6 | | | | | | |
| Lagerung bei RT (Tage) | 1 | 2 | 3 | 4 | 5 | 6 |
| Klebrigkeit | z | i | i | i | i/t | t |
| Flexibilität | s | f | f | f | f | sp |
| Beispiel 7 | | | | | | |
| Lagerung bei RT (Tage) | 1 | 2 | 3 | 4 | | |
| Klebrigkeit | z | i | i | t | | |
| Flexibilität | s | f | f | sp | | |
| Beispiel 8 | | | | | | |
| Lagerung bei RT (Tage) | 1 | 2 | 3 | 4 | 5 | 6 |
| Klebrigkeit | z | z | i | i | i/t | t |
| Flexibilität | s | s | f | f | f | sp |
| Beispiel 9 | | | | | | |
| Lagerung bei RT (Tage) | 1 | 2 | 3 | 4 | 5 | 6 |
| Klebrigkeit | z | z | i | i | i/t | t |
| Flexibilität | s | s | f | f | f | sp |

<u>Eigenschaften der ausgehärteten Produkte</u>

Zur Bestimmung der Zugscherfestigkeit nach DIN 53283 werden die Prepregs 15 Minuten bei 100 °C gehärtet.

Für die Laminatherstellung werden die Prepregs in gleich grosse Teile (6,5 x 9,9 cm) geschnitten. Die Folien werden entfernt, zwölf Prepreglagen werden aufeinandergelegt und so in einer Form auf der Presse mit max. 5 MPa verpresst und 15 Minuten bei 100 °C ausgehärtet. Die Dicke des Laminats beträgt 3-3,3 mm. Die Prüfkörper für Messungen der Interlaminaren Scherfestigkeit nach ASTM-D-2344 werden aus dem so hergestellten Laminat geschnitten.

Die Resultate der Messungen sind in Tabelle 4 aufgeführt.

Tabelle 4

| Beispiel | Zugscherfestigkeit [N/mm²] | Interlaminare Scherfestigkeit [1) [N/mm²] A | B |
|---|---|---|---|
| 1 | 16,2 | 66,2 | 52,4 |
| 2 | 14,6 | 63,2 | 53,1 |
| 3 | 17,1 | 66,3 | 51,6 |
| 4 | 17,9 | | |
| 5 | 11,4 | 72,2 | 64 |
| 6 | 18,6 | | |
| 7 | 18,0 | | |
| 8 | 24,0 | | |
| 9 | 19,6 | | |

1) A: gemessen nach der Härtung

B: gemessen nach der Härtung und nach 1 h in kochendem Wasser

Härtung bei 65-80 °C

Die Zusammensetzungen der Beispiele 1-5 werden bei Temperaturen zwischen 65 und 80 °C gehärtet. Die mittels DSC (Mettler TA 3000) bestimmten Glasumwandlungstemperaturen ($T_{go}$: Schnittpunkt der verlängerten Basislinie mit der Tangenten an die Messkurve im Bereich des steilsten Anstiegs) sowie die Restenthalpien und die daraus berechneten Umsätze sind in Tabelle 5 angegeben.

Tabelle 5: $T_{go}$, Restenthalpie und Umsatz nach Härtung bei 65-80 °C

| Aushärtung | $T_{go}$ [°C] | Restenthalpie [J/g] | Umsatz [%] |
|---|---|---|---|
| Beispiel 1 | | | |
| 4 h/65 °C | 75 | 32 | 91 |
| 8 h/65 °C | 75,5 | 30 | 92 |
| 6 h/70 °C | 80 | 20 | 94 |
| 8 h/70 °C | 80 | 20 | 94 |
| 2 h/80 °C | 82 | 0 | 100 |
| Beispiel 2 | | | |
| 6 h/65 °C | 73 | 47 | 89 |
| 8 h/70 °C | 79 | 35 | 92 |
| 2 h/80 °C | 82 | 0 | 100 |
| Beispiel 3 | | | |
| 24 h/65 °C | 84 | 84,6 | 81 |
| 8 h/70 °C | 92 | 58,7 | 86,5 |
| 8 h/80 °C | 97 | 36,6 | 92 |
| Beispiel 4 | | | |
| 24 h/65 °C | 81 | 36 | 84 |
| 8 h/70 °C | 85,5 | 25 | 89 |
| 8 h/80 °C | 89 | 21 | 91 |
| Beispiel 5 | | | |
| 4 h/80 °C | 108 | 0 | 100 |

**Patentansprüche**

1. Härtbare Zusammensetzung enthaltend
   (a) ein Epoxidharz,
   (b) ein tertiäres Amin oder eine Imidazolverbindung und
   (c) bis zu 30 Gew.%, bezogen auf den Anteil der Komponente (a), eines Polycarbonsäureanhydrids.

2. Zusammensetzung gemäss Anspruch 1, enthaltend 1-20 Gew.%, vorzugsweise 2-15 Gew.%, der Komponente (c), bezogen auf den Anteil der Komponente (a).

3. Zusammensetzung gemäss Anspruch 1, worin das Epoxidharz (a) flüssig ist.

4. Zusammensetzung gemäss Anspruch 1, worin das Epoxidharz (a) ein Diglycidylether eines Bisphenols oder ein Epoxinovolak ist.

5. Zusammensetzung gemäss Anspruch 1, worin das Epoxidharz (a) ein Bisphenol A- oder Bisphenol F-diglycidylether ist.

6. Zusammensetzung gemäss Anspruch 1, worin das tertiäre Amin (b) zwei oder mehr Srickstoffatome enthält.

7. Zusammensetzung gemäss Anspruch 1, worin das tertiäre Amin (b) zwei oder drei Dialkylaminogruppen enthält.

8. Zusammensetzung gemäss Anspruch 1, worin das tertiäre Amin (b) 2-Dimethylaminoethyl-3-dimethylaminopropylether, N,N′-Dimethylpiperazin oder N,N,N′,N′,N″-Pentamethyldiethylentriamin ist.

9. Zusammensetzung gemäss Anspruch 1, worin die Komponente (b) eine Imidazolverbindung ist.

10. Zusammensetzung gemäss Anspruch 1, worin die Komponente (b) 1-Methylimidazol oder 2-Ethylimidazol ist.

11. Zusammensetzung gemäss Anspruch 1, worin das Polycarbonsäureanhydrid (c) ein Dicarbonsäureanhydrid ist.

12. Zusammensetzung gemäss Anspruch 1, worin das Polycarbonsäureanhydrid ausgewählt wird aus der Gruppe bestehend aus Phthalsäureanhydrid, Tetrahydrophthalsäureanhydrid, Methyltetrahydrophthalsäureanhydrid, Hexahydrophthalsäureanhydrid, Methylhexahydrophthalsäureanhydrid, Nadicanhydrid und Methylnadicanhydrid.

13. Zusammensetzung gemäss Anspruch 1, das zusätzlich zu den Komponenten (a) bis (c) noch (d) einen oder mehrere Härter für das Epoxidharz enthält.

14. Zusammensetzung gemäss Anspruch 13, worin die Komponente (d) ein latenter Härter ist.

15. Zusammensetzung gemäss Anspruch 14, worin der latente Härter 4,4′-Diaminodiphenylsulfon oder Dicyandiamid ist.

16. Zusammensetzung gemäss Anspruch 13, worin die Komponente (d) ein Mercaptan mit mindestens zwei SH-Gruppen ist.

17. Zusammensetzung gemäss Anspruch 13, worin die Komponente (d) ein Gemisch aus einem latenten Härter und einem Mercaptan mit mindestens zwei SH-Gruppen ist.

18. Vernetzte Produkte erhältlich durch Härtung einer Zusammensetzung gemäss Anspruch 1.

19. Faserverbund, imprägniert mit einem Stoffgemisch gemäss Anspruch 1.

20. Prepregs erhältlich durch Imprägnierung eines Gewebes mit einer Zusammensetzung gemäss Anspruch 1.

21. Laminate erhältlich durch vollständige Aushärtung der Prepregs gemäss Anspruch 20.

Europäisches Patentamt

# EUROPÄISCHER RECHERCHENBERICHT

Nummer der Anmeldung

EP 92 81 0453

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
| X | US-A-4 349 645 (ALLEN L. GRIGGS)<br>* Spalte 2, Zeile 58 - Zeile 62; Anspüche; Spalte 4, Zeile 55 - Spalte 5, Zeile 62 *<br>--- | 1-21 | C 08 G 59/68<br>C 08 G 59/18<br>C 08 G 59/40<br>C 08 G 59/66 |
| X | EP-A-0 193 068 (ASAHI KASEI KOGYO KK)<br>* Seite 11, Zeile 20 - Zeile 24; Ansprüche *<br>--- | 1-21 | |
| X | DE-A-3 815 234 (SKW TROSTBERG AG)<br>* Seite 2, Zeile 59 - Zeile 68; Ansprüche *<br>----- | 1-21 | |
| | | | RECHERCHIERTE SACHGEBIETE (Int. Cl.5) |
| | | | C 08 G |

Der vorliegende Recherchenbericht wurde für alle Patentansprüche erstellt

| Recherchenort | Abschlußdatum der Recherche | Prüfer |
|---|---|---|
| DEN HAAG | 09-09-1992 | DERAEDT G. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)